**Europäisches Patentamt**

(19) **European Patent Office**

**Office européen des brevets**

(11) Numéro de publication: **0 066 925**
**B1**

(12) **FASCICULE DE BREVET EUROPEEN**

(45) Date de publication du fascicule du brevet:
**04.09.85**

(51) Int. Cl.⁴: **H 04 N 9/67,** A 63 F 9/22,
G 09 G 1/28

(21) Numéro de dépôt: **82200646.6**

(22) Date de dépôt: **27.05.82**

(54) Générateur de signaux vidéo trichromes, tel qu'un jeu vidéo, utilisable avec un reproducteur d'images monochrome.

(30) Priorité: **01.06.81 FR 8110767**

(43) Date de publication de la demande:
**15.12.82 Bulletin 82/50**

(45) Mention de la délivrance du brevet:
**04.09.85 Bulletin 85/36**

(84) Etats contractants désignés:
**DE FR GB**

(56) Documents cités:
**FR - A - 2 417 901**

**WIRELESS WORLD, vol.82, no.1486, juin 1976, Londres (GB) J.F. DANIELS: "Wireless world teletext decoder", pages 53-56**
**WIRELESS WORLD, vol.81, no.1480, décembre 1975, Londres (GB) J.F. DANIELS: "Wireless world teletext decoder", pages 563-566**

(73) Titulaire: **LA RADIOTECHNIQUE, Société Anonyme dite:, 51, rue Carnot BP 301, F-92156 Suresnes Cedex (FR)**
(84) Etats contractants désignés: **FR**

(73) Titulaire: **N.V. Philips' Gloeilampenfabrieken, Groenewoudseweg 1, NL-5621 BA Eindhoven (NL)**
(84) Etats contractants désignés: **DE GB**

(72) Inventeur: **Kerling, Jean-Marie, Société Civile S.P.I.D. 209 rue de l'Université, F-75007 Paris (FR)**

(74) Mandataire: **Pinchon, Pierre, Société Civile S.P.I.D. 209 rue de L'Université, F-75007 Paris (FR)**

## Description

La présente invention concerne un générateur de signaux vidéo trichromes, tel qu'un jeu vidéo, comportant notamment un circuit fournissant des signaux de couleurs rouge (R), vert (V) et bleu (B), générateur utilisable avec un reproducteur d'images monochromes du fait qu'il comporte un réseau de matriçage ajustable à trois branches résistives connectées de manière à fournir à une sortie commune un signal de luminance (Y) formé à partir des trois signaux de couleurs précités.

A propos de la construction d'un décodeur de télétexte, il est indiqué dans les articles de J.F. Daniels, parus dans la revue WIRELESS WORLD d'une part au volume 81, N° 1480, pages 563 à 566, de décembre 1975, et d'autre part au volume 82, N° 1486, pages 53 à 55 de juin 1976, qu'il est possible d'obtenir un signal de luminance convenant pour un téléviseur noir et blanc lorsque l'utilisateur ne dispose pas d'un téléviseur couleur. Dans ce but, les signaux de couleurs fournis par le décodeur sont mélangés au moyen de résistances variables dont la valeur peut être ajustée pour obtenir l'échelle de gris désirée correspondant aux couleurs transmises. Il s'agit là, à priori, de résistances dont le réglage est effectué une fois pour toutes.

L'invention vise plus particulièrement, mais non exclusivement, les jeux dits «vidéo» destinés à être branchés sur un téléviseur, soit sur la prise antenne, soit sur l'entrée «vidéo-composite» de la prise «péritélévision» équipant les appareils récents.

Dans leur majorité, les jeux vidéo fabriqués actuellement sont conçus pour être utilisés avec un téléviseur couleur, et leur branchement éventuel sur un téléviseur noir et blanc pose un problème de contraste pour l'exploitation de certains des jeux pouvant être programmés.

On sait qu'en raison de l'obligation de compatibilité, une image émise codée en couleurs est normalement visible sur un téléviseur noir et blanc, les différentes teintes se traduisant alors par des niveaux de luminance allant du noir au blanc pur en passant par toutes les valeurs intermédiaires de gris; ceci ne présente aucun inconvénient pour la réception d'une image animée, parfaitement visible malgré l'absence des informations chromatiques d'origine.

Il n'en va pas de même pour certains jeux vidéo où l'information couleur constitue un élément capital de reconnaissance de certains éléments de l'image reçue; ainsi, deux couleurs très différentes peuvent être traduites par deux gris de luminances très voisines, et de ce fait fort difficile à différencier.

Cette situation peut nuire à la diffusion commerciale des jeux vidéo car les circonstances où ils peuvent être utilisés avec un téléviseur noir et blanc sont nombreuses: présence d'un second téléviseur au foyer, résidence secondaire équipée d'un téléviseur noir et blanc, etc.

La même difficulté peur se présenter pour l'exploitation de certains micro-ordinateurs utilisant normalement un téléviseur du commerce comme terminal de visualisation, et où l'interprétation de textes, de graphiques, etc., en noir et blanc poserait le même problème de contraste.

On peut encore citer pour un avenir proche le cas où l'on désire brancher un jeu vidéo ou un micro-ordinateur sur un récepteur de vidéo-textes ou d'annuaires téléphonique électronique, les possibilités d'utilisation de ceux-ci s'en trouvant ainsi étendues.

La demande de brevet français N° 2 417 901 décrit un circuit permettant de modifier l'échelle des gris d'un reproducteur d'images monochrome, et en particulier d'accroître le niveau de luminance des signaux trop proches du niveau du noir; toutefois, ce circuit est spécifiquement destiné à équiper un reproducteur d'images, ce qui exclut sa mise en œuvre dans un téléviseur normal du commerce; de plus, il n'agit qu'exclusivement sur les niveaux proches du noir, tel que le bleu, mais il n'agit en aucun cas sur la différence de deux couleurs quelle que soit leurposition dans l'échelle des gris, et il fait appel à des combinaisons de circuits logiques et analogique relativement complexes et coûteux.

Un des buts de la présente invention est d'offrir un moyen simple et économique à l'utilisateur d'un générateur tel qu'un jeu vidéo, de modifier à volonté l'échelle des gris de l'image reproduite sur un reproducteur d'images monochromes pour contraster celle-ci de façon à permettre une exploitation comparable à celle d'une image couleur, tandis que l'équilibre normal «couleur» peur être rétabli à tout moment pour une utilisation sur téléviseur trichrome.

Selon l'invention, un générateur de signaux vidéo trichromes, tel qu'un jeu vidéo, comportant notamment un circuit fournissant des signaux de couleurs rouge (R), vert (V) et bleu (B), générateur utilisable avec un reproducteur d'images monochromes du fait qu'il comporte un réseau de matriçage ajustable à trois branches résistives connectées de manière à fournir à une sortie commune un signal de luminance (Y) formé à partir des trois signaux de couleurs précités, est caractérisé en ce qu'un potentiomètre est disposé entre la branche résistive du signal rouge (R) et la branche résistive du signal bleu (B), le curseur dudit potentiomètre ètant relié à la branche résistive du signal vert (V) et à ladite sortie commune, en ce que la commande dudit potentiomètre est accessible à l'utilisateur pour lui permettre de faire varier à volonté le contraste des images monochromes par une modification des proportions respectives des signaux de couleur rouge (R) et bleu (B) dans le signal de luminance (Y), et en ce que des moyens de repérage ou de commutation sont prévus pour permettre de rétablir l'équilibre normal «couleur» du signal de luminance.

En agissant sur les caractéristiques du réseau matriciel, l'échelle des gris de l'image est modifiée, ce qui permet à l'utilisateur de contraster au maximum les éléments de ladite image devant être différenciés.

Lorsque le générateur se trouve connecté à un téléviseur couleurs, l'équilibre normal des couleurs peut être rapidement et simplement rétabli.

Selon un mode particulier de mise en œuvre de l'invention, le générateur de signaux vidéo comporte un inverseur commutant l'une des branches du réseau matriciel et le curseur du potentiomètre.

La description qui va suivre en regard des dessins annexés fera bien comprendre comment l'invention peut être réalisée.

La figure 1 représente le signal de luminance Y associé à une mire de barres de couleurs transmise en télévision.

La figure 2 représente un schéma synoptique simplifié d'un jeu vidéo muni de la commande de modification du matriçage de signaux R, V, B selon l'invention.

Les figures 3 et 4 représentent deux modes différents de réalisation de la commande de modification du matriçage selon l'invention.

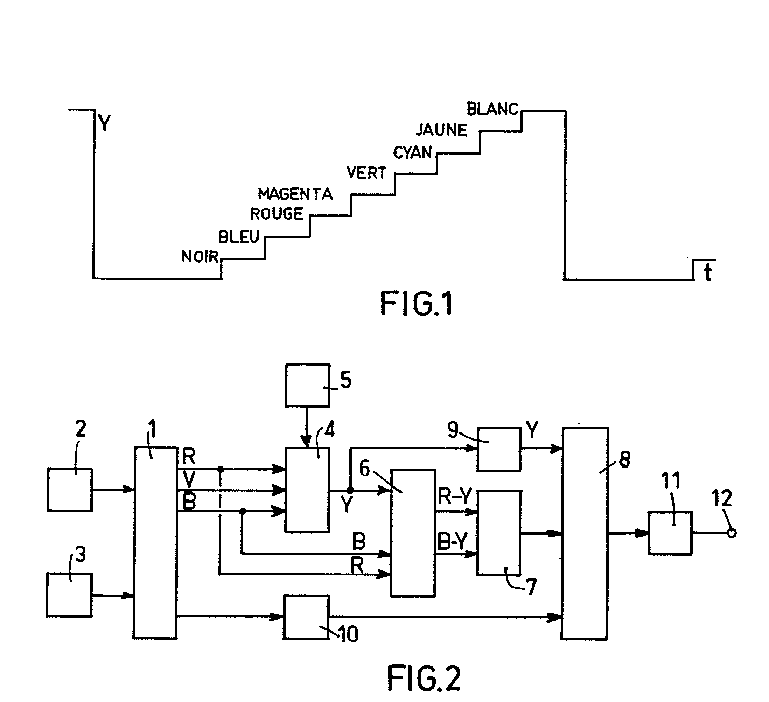

Sur la figure 1, l'amplitude du signal de luminance pour les différentes barres de couleurs est conditionnée par un matriçage des signaux R, V, B, selon la relation suivante: Y (luminance) = 0,30 R +0,59 V +0,11 B.

On peut voir dans ces conditions que deux couleurs très contrastées pour l'œil, telles que le bleu et le rouge, se traduisent en noir et blanc par deux gris très voisins; pour peu que les tolérances de matriçage du générateur jouent dans des sens défavorables, ces deux gris seront pratiquement impossibles à différencier.

Par contre, si l'on augmente par exemple la proportion de rouge par rapport au bleu dans le signal de luminance, les deux gris correspondants seront alors aisément discernables.

Sur la figure 2, un circuit 1 d'élaboration de signaux de jeu comporte deux entrées reliées à deux commandes manuelles de jeu 2 et 3, trois sorties de signaux numériques de jeu R, V, B, et une sortie de signaux de synchronisation.

Les signaux numériques R, V, B sont appliqués aux entrées d'un réseau résistif de matriçage 4 muni d'une sortie de signal de luminance Y.

Le réseau de matriçage 4 comporte une commande manuelle 5 de modification des rapports respectifs de signaux RVB dans le signal de luminance Y.

Les entrées d'un second réseau matriciel 6 sont connectées à la sortie Y de la matrice 4, et aux sorties R et B du circuit 1. Le réseau 6 possède deux sorties de signaux de différence de couleurs R–Y et B–Y reliées aux entrées d'un circuit de codage 7.

Les trois entrées d'un circuit mélangeur 8 sont respectivement connectées à la sortie d'un circuit 9 d'adaptation du signal de luminance (par exemple une ligne à retard), à la sortie «chrominance» du circuit de codage 7, et à la sortie d'un circuit 10 de mise en forme des signaux de synchronisation issus du circuit 1.

La sortie «vidéo-composite» du circuit mélangeur 8 est reliée à l'entrée de modulation d'un générateur 11 VHF ou UHF muni d'une sortie «antenne» 12.

Dans le générateur représenté figure 2, où une éventuelle voie «son» n'a past été représentée, la modification de l'équilibre du signal de luminance Y au moyen de la commande 5 se retrouve dans le signal vidéo composite issu du circuit 8; le circuit de codage 7 traite les signaux R–Y et B–Y suivant les normes SECAM, PAL ou NTSC en accord avec le téléviseur couleur utilisé.

Il est à noter que le schéma synoptique de la figure 2 s'applique tout aussi bien à un micro-ordinateur, le circuit 1 devenant l'unité de traitement et les commandes 2 et 3 un clavier et une mémoire à disque par exemple.

Egalement de façon non représentée, la sortie du circuit mélangeur 8 est munie d'une borne destinée à être raccordée à l'entrée «vidéo-composite» des téléviseurs pourvus d'une prise «péritélévision».

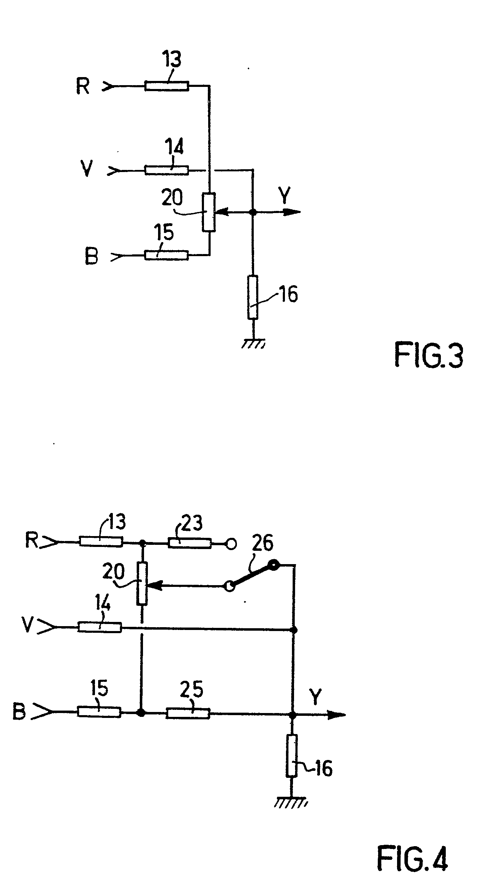

La figure 3 montre une première forme de réalisation de la commande de modification des proportions des signaux R, V, B dans le signal de luminance Y; le réseau de matriçage comporte quatre résistances fixes 13, 14, 15 et 16 et un potentiomètre 20 disposé entre les résistances 13 et 15, le curseur de celui-ci étant relié au point commun des résistances 14 et 16. La manœuvre du potentiomètre 20 fait varier en sens inverse les proportions respectives des niveaux rouge et bleu dans le signal de luminance, le niveau vert restant sensiblement fixe.

La repérage du rapport normal «couleur» peut se faire en munissant le potentiomètre, soit d'un index de repérage, soit d'un «cran» de positionnement à mi-course; dans ce dernier cas, la valeur de la résistance série dans chaque branche sera choisie de façon à donner la résistance totale correspondant au matriçage normal «couleur».

Sur la figure 4 dont les références sont communes avec celles de la figure 3, le schéma du réseau de matriçage correspond à celui de la figure 3 auquel a été adjoint un inverseur 26 commutant l'une des branches (13, 23 par exemple) du réseau matriciel et le curseur du potentiomètre (20). Deux résistances fixes 23, 25 sont respectivement dispoées en série avec les résistances 13 et 15.

L'inverseur 26 est représenté en position «noir et blanc». En position «couleur», la résistance 23 disposée en série avec la résistance 13 rétablit le matriçage normal.

**Revendication**

1. Générateur de signaux vidéo trichromes, tel qu'un jeu vidéo, comportant notamment un circuit fournissant des signaux de couleur rouge (R), vert (V) et bleu (B), générateur utilisable avec un reproducteur d'imges monochromes du fait qu'il comporte un réseau de matriçage ajustable à trois branches résistives connectées de manière à fournir à une sortie commune un signal de luminance (Y) formé à partir des trois signaux de couleurs précités, caractérisé en ce qu'un potentiomètre (20) est disposé entre la branche résistive (13) du signal rouge (R) et la branche résistive (15) du signal bleu (B), le curseur dudit potentiomètre étant relié à la branche résistive du signal vert (V) et à ladite sortie commune, en ce que la commande dudit potentiomètre est accessible à l'utilisateur pour lui permettre de faire varier à volonté la contraste des images monochromes par une modification des proportions respectives des signaux de couleur rouge (R) et bleu (B) dans le signal de luminance (Y), et en ce que des moyens de repérage ou de commutation sont prévus pour permettre de rétablir l'équilibre normal «couleur» du signal de luminance.

2. Générateur de signaux vidéo selon la revendication 1, caractérisé en ce qu'il comporte un inverseur (26) commutant l'une des branches (13, 23) (15, 25) du réseau matriciel autre que celle du signal vert, et le curseur du potentiomètre (20).

3. Jeu vidéo caractérisé par l'utilisation d'un générateur selon l'une des revendications 1 ou 2.

**Patentansprüche**

1. Dreifarbvideosignalgenerator, wie zum Beispiel ein Videospiel, mit im wesentlichen einer Schaltungsanordnung, die rote (R), grüne (V) und Blaue (B) Farbsignale liefert, wobei der Generator mit einem Wiedergabegerät für einfarbige Bilder verwendbar ist aufgrund eines Matrixnetzwerkes, das auf drei Widerstandszweige einstellbar ist, die derart verbunden sind, dass an einem gemeinsamen Ausgang ein Leuchtdichtesignal (Y) geliefert wird, das aus den drei Farbsignalen gebildet ist, dadurch gekennzeichnet, dass ein Potentiometer (20) zwische dem Widerstandszweig (13) des roten Signals (R) und dem Widerstandszweig (15) des blauen Signals (B) vorgesehen ist, wobei der Schleifer des Potentiometers mit dem Widerstandszweig des grünen Signals (V) sowie mit dem gemeinsamen Ausgang verbunden ist, dass der Benutzer das genannte Potentiometer bedienen kann um den Kontrast der einfarbigen Bilder durch eine Änderung der Verhältnisse zwischen den roten (R) und blauen (B) Farbsignalen in dem Leuchtlichtsignal (Y) zu ändern, und dass Markierungs- oder Kommutierungsmittel vorgesehen sind um das normale «Farb»-Gleichgewicht des Leuchtlichtsignals wiederherzustellen.

2. Videosignalgenerator nach Anspruch 1, dadurch gekennzeichnet, dass dieser einen Inverter (26) enthält, der einen der nicht grünen Zweige (13, 23) (15, 25) des Matrixnetzwerkes und den Schleifer des Potentiometers (20) miteinander verbindet.

3. Videospiel, gekennzeichnet durch den Gebrauch eines Generators nach einem der Ansprüche 1 oder 2.

**Claims**

1. A tri-colour video signal generator, such as a video game, comprising more specifically a circuit producing red (R), green (V) and blue (B) colour signals, which generator is suitable for use with a monochrome picture display device because of the fact that it comprises an adjustable matrix network having three resistive branches which are connected such that they supply from a common input a luminance signal (Y) which is formed from the above-mentioned three colour signals, characterized in that a potentiometer (20) is arranged between the resistive branch (13) for the red signal (R) and the resistive branch (15) for the blue signal (B), the sliding contact of said potentiometer being connected to the resistive branch of the green signal (V) and to said common output, in that the control of said potentiometer is accessible to the user to enable him to vary optionally the contrast of the monochrome pictures by altering the respective ratios of the red (R) and blue (B) colour signals in the luminance signal (Y), and in that setting or switchover means are provided to enable reestablishment of the normal «colour» blanace of the luminance signal.

2. A video signal generator as claimed in Claim 1, characterized in that it comprises an inverter (26) for switching-over one of the vranches (13, 23) (15, 25) of the matrix network other than that of the green signal, and the sliding contact of the potentiometer (20).

3. A video game, characterized in that it uses a generator as claimed in one of the Claims 1 or 2.

FIG.1

FIG.2

FIG.3

FIG.4